Europäisches Patentamt

European Patent Office

Office européen des brevets

(19)

(11) Veröffentlichungsnummer: **0 268 814**
**A2**

(12) # EUROPÄISCHE PATENTANMELDUNG

(21) Anmeldenummer: 87115210.4

(22) Anmeldetag: 17.10.87

(51) Int. Cl.⁴: **G21C 3/06 , G21C 21/02 ,**
**G21C 3/64**

(30) Priorität: 27.11.86 DE 3640494

(43) Veröffentlichungstag der Anmeldung:
01.06.88 Patentblatt 88/22

(84) Benannte Vertragsstaaten:
CH DE FR GB LI

(71) Anmelder: HOBEG
Hochtemperaturreaktor-Brennelement GmbH
Rodenbacher Chaussee 6
D-6450 Hanau 11(DE)

(72) Erfinder: Hackstein, Karl-Gerhard, Dr.
Dipl.-Chem.
Röntgenstrasse 20
D-6450 Hanau(DE)
Erfinder: Hrovat, Milan, Dr.Dipl.-Ing.
Meisenweg 7
D-6458 Rodenbach(DE)
Erfinder: Mehner, Alfred-Wilhelm,
Dr.Dipl.-Phys.
Auf der Hörn 54a
D-5100 Aachen(DE)

(74) Vertreter: Nowak, Gerhard
DEGUSSA AG Fachbereich Patente
Rodenbacher Chaussee Postfach 1345
D-6450 Hanau 1(DE)

(54) Kugelförmiges Brennelement für Hochtemperaturreaktoren und Verfahren zu seiner Herstellung.

(57) Es wird ein kugelförmiges Brennelement für gasgekühlte Hochtemperaturreaktoren beschrieben, bestehend aus einem brennstoffhaltigen Graphitkern und einer brennstofffreien Graphitaußenschale, das auch bei Temperaturen oberhalb 2000°C eine ausreichende Oxidationsbeständigkeit und mechanische Integrität aufweist. Dazu ist die Außenschale mit einer Schutzschicht aus hochschmelzender Oxidkeramik versehen, die übergangslos mit der Graphitschale verbunden sein muß und keine offene Porosität aufweisen darf.

## Kugelförmiges Brennelement für Hochtemperaturreaktoren und Verfahren zu seiner Herstellung

Die Erfindung betrifft ein kugelförmiges Brennelement für gasgekühlte Hochtemperaturreaktoren, bestehend aus einem Graphitmatrixkern, in dem die brennstoffhaltigen Teilchen eingebettet sind und einer brennstofffreien Außenschale aus der gleichen Graphitmatrix, die mit dem Graphitmatrixkern übergangslos verbunden ist, und ein Verfahren zu seiner Herstellung.

Kugelförmige Brennelemente für Hochtemperaturreaktoren bestehen üblicherweise aus einem brenn- und brutstoffhaltigen Kern, der von einer brennstofffreien Schale umgeben und mit ihr übergangslos verbunden ist. Die Graphitmatrix, d.h. der Graphitwerkstoff, ist im Kugelkern und in der Schale identisch. Der Brennelementdurchmesser beträgt im allgemeinen etwa 60 mm und die Dicke der Außenschale etwa 5 mm.

Bei den bekannten Kugelbrennelementen enthält der Kern in gleichmäßiger Verteilung den Brenn- und Brutstoff in Form sphärischer Schwermetallteilchen. Die Teilchen sind zur Zurückhaltung von Spaltprodukten mit Mehrfachschichten aus pyrolytischen Kohlenstoff - ggf. mit einer Zwischenschicht aus Siliziumkarbid - versehen. Als Brennstoff werden normalerweise Uran 235 und als Brutstoff Uran 238 oder Thorium 232 in oxidischer Form eingesetzt.

An die kugelförmigen Brennelemente werden eine Reihe von Anforderungen gestellt. Sie müssen hohe Festigkeitswerte, wie Fallfestigkeit, Bruchfestigkeit, Abriebfestigkeit aufweisen. Insbesondere wird eine hohe Korrosionsbeständigkeit gegen Spurenverunreinigungen des Kühlgases und eine hohe Oxidationsbeständigkeit gefordert.

Es war daher Aufgabe der vorliegenden Erfindung ein kugelförmiges Brennelement für gasgekühlte Hochtemperaturreaktoren, bestehend aus einem Graphitmatrixkern, in dem die brennstoffhaltigen Teilchen eingebettet sind, und einer brennstofffreien Außenschale aus der gleichen Graphitmatrix, die mit dem Graphitmatrixkern übergangslos verbunden ist, zu entwickeln, das allen auftretenden Belastungen standhält, und insbesondere die Oxidationsbeständigkeit und die mechanische Intergrität verbessert.

Die Aufgabe wird erfindungsgemäß dadurch gelöst, daß die brennstofffreie Graphitaußenschale mit einer Schutzschicht aus hochschmelzender Oxidkeramik versehen ist, wobei diese keramische Schutzschicht übergangslos mit der brennstofffreien Graphitaußenschale verbunden ist und keine offene Porosität aufweist.

Diese keramische Schutzschicht weist eine hohe Temperaturbeständigkeit und eine hohe Oxidationsbeständigkeit gegenüber Luft, Wasserdampf und Kohlenoxid auf. Außerdem erfolgt keine Wertigkeitsänderung und keine Phasenumwandlung innerhalb der Materialien der Schutzschicht, Sie besitzt keine offene Porosität und nur einen geringen Neutroneneinfangquerschnitt.

Die Dicke der keramischen Schutzschicht wird so bemessen, daß die Schicht den mechanischen Anforderungen im Reaktornormalbetrieb standhält. Üblicherweise besitzt sie eine ·Stärke von 50 bis 200 $\mu$m.

Als hochschmelzende Oxide eignen sich vor allem Aluminiumoxid ($Al_2O_3$), Berylliumoxid (BeO) Magnesiumoxid (MgO), Yttriumoxid ($Y_2O_3$), Zirkonoxid ($ZrO_2$) oder Mischungen aus diesen Oxiden. Besonders vorteilhaft ist die Verwendung von Zirkonoxid.

Zirkonoxid zeichnet sich durch eine hohe Temperatur beständigkeit, Festigkeit, chemische Stabilität in oxidierender und reduzierender Atmosphäre und gute Verträglichkeit mit Graphit bis zu Temperaturen von etwa 2400°C aus.

Die besonders in Reaktorcores auftretenden Anforderungen der Brennelemente an Temperaturwechselbeständigkeit, Festigkeits- und Leitfähigkeitseigenschaften können verbessert werden, wenn der $ZrO_2$-Schutzschicht 1 - 10 % Erdalkalioxide, vorzugsweise MgO in einem Umfang von etwa 5 Gew.-%, zugesetzt werden. Analoge Verbesserungen werden auch erreicht, wenn der $ZrO_2$-Schutzschicht Yttriumoxid ($Y_2O_3$) im gleichen Umfang zugesetzt wird.

Die keramischen Schutzschichten und die darunterliegende Graphitaußenschale werden bezüglich der thermischen Ausdehnung aneinander angepaßt. Die Anpassung kann durch Variation des Naturgraphit-Anteils in der Graphitkugel oder durch die Variation des Erdalkaligehalts in der keramischen Schutzschicht erfolgen.

Die $ZrO_2$-Schutzschicht mit den genannten Zusätzen wird vorzugsweise durch Plasmaspritzen und anschließende isostatische Nachverdichtung aufgebracht, ebenso die anderen Schutzschichtmaterialien. Jedoch ist auch Flammspritzen möglich.

Bei Temperaturen oberhalb 1200°C und Drücken über 30 MPa wird ein übergangsloser Verbund zwischen Graphitmatrixschale und keramischer Schutzschicht erreicht.

Da die Dicke der $ZrO_2$-Schicht üblicherweise nur etwa 100 $\mu$m beträgt, wird die Brennstofftemperatur durch die niedrigere Wärmeleitfähigkeit des $ZrO_2$ nur im zulässigen Rahmen beeinflußt. Die Korrosionsrate der $ZrO_2$-Schutzschicht, gemessen im Standardkorrosionstest mit Wasserdampf in Helium bei 1000°C, lag mehr als zwei Größenordnungen unter den an Graphitmatrix gemessen Standardwerten von 0,6 mg/h cm².

Die übrigen Brennelementeiegenschaften wie Fallfestigekeit, Bruchlast, Abriebfestigkeit, Urankontamination werden durch die keramische Schutzschicht nicht negativ beeinflusst.

Folgende Beispiele sollten das erfindungsgemäße Brennelement näher erläutern:

1. Brennelementgrünlinge wurden nach einem isostatischen Preßverfahren hergestellt, wie in der DE-PS 16 46 783 beschrieben. Diese Grünlinge werden in mit Methanol benetztem, mit 5 % MgO stabilisiertem $ZrO_2$, das eine mittlere Körnung von 20 μm besaß, abgerollt. Dadurch bekam die Oberfläche der Grünlinge eine definierte Rauhigkeit.
Anschließend werden diese Kugeln unter Stickstoff verkokt und im Vakuum eine Stunde bei etwa 2000°C geglüht. Auf die so behandelten Kugeln wurde durch Plasmasprühen bei 1300°C eine ca. 200 μm dicke, mit 5 % MgO stabilisierte $ZrO_2$-Schicht aufgetragen. Im abschließenden Fertigungsschritt wurde die Schutzschicht bei 1250°C und 30 MPa isostatisch auf eine Dichte von 5,83 g/cm³ nachverdichtet und gleichzeitig fest mit der durch das aufgebrachte $ZrO_2$-Pulver angerauhten Graphitoberflächen der Brennelementkugeln verbunden. Bei der anschließenden Charakterisierung der Kugeln wurden die für Brennelemente spezifizierten mechanischen eigenschaften wie Fallfestigkeit, Bruchlast, Abriebfestigkeit eingehalten. Die Korrosionsraten im Standardkorrosionstest mit Wasserdampf in He bei 1000°C lagen mit 0,003 mg/h cm² an der Nachweisgrenze und mehr als zwei Größenordnungen unterhalb des an Standardbrennelementen gemessenen Wertes von 0,6 mg/h cm².

2. Die Brennelementgrünlinge wurden ebenfalls nach dem isostatischen Preßverfahren gemäß der DE-PS 16 46 783 hergestellt. Diese Grünlinge wurden in mit Methanol benetztem, mit 3 % $Y_2O_3$ stabiliesiertem $ZrO_2$, das eine mittlere Körnung von 20 μm besitzt, abgerollt. Dadurch erhielt die Oberfläche der Grünlinge eine definierte Rauhigkeit.
Anschließend wurden diese Kugeln unter Stickstoff verkokt und im Vakuum eine Stunde bei etwa 2000°C geglüht. Auf die so behandelten Graphitkugeln wurde durch Plasmasprühen eine ca. 200 μm dicke, mit 3 % $Y_2O_3$ stabilisierte $ZrO_2$-Schicht aufgetragen. Im abschließenden Fertigungsschritt wurde die Schutzschicht bei 1250°C und 50 MPa isostatisch auf eine Dichte von 5,83 g/cm³ nachverdichtet und gleichzeitig fest mit der durch das aufgebrachte $ZrO_2$-Pulver angerauhten Graphitoberflächen der Brennelementkugeln verbunden. Bei der anschließenden Charakterisierung der Kugeln wurden die für Brennelemente spezifizierten mechanischen Eigenschaften, wie Fallfestigkeit, Bruchlast, Abriebfestigkeit eingehalten. Die Korrosionsraten im Standardkorrosionstest mit Wasserdampf in He bei 1000°C lagen mit 0,003 mg/h cm ebenfalls an der Nachweisgrenze und mehr als zwei Größenordnungen unterhalb des an Standardbrennelementen gemessenen Wertes von 0,6 mg/h cm².

## Ansprüche

1. Kugelförmiges Brennelement für gasgekühlte Hochtemperaturreaktoren, bestehend aus einem Graphitmatrixkern, in dem brennstoffhaltigen Teilchen eingebettet sind, und einer brennstofffreien Außenschale aus der gleichen Graphitmatrix, die mit dem Graphitmatrixkern übergangslos verbunden ist,
dadurch gekennzeichnet,
daß die brennstofffreie Graphitaußenschale mit einer Schutzschicht aus hochschmelzender Oxidkeramik versehen ist, wobei diese keramische Schutzschicht übergangslos mit der brennstofffreien Graphitaußenschale verbunden ist und keine offene Porosität aufweist.

2. Kugelförmiges Brennelement nach Anspruch 1,
dadurch gekennzeichnet,
daß die keramische Schutzschicht aus Aluminiumoxid ($Al_2O_3$), Berylliumoxid (BeO), Magnesiumoxid (MgO), Yttriumoxid ($Y_2O_3$), Zirkonoxid ($ZrO_2$) oder aus Kombinationen dieser Oxide besteht.

3. Kugelförmiges Brennelement nach Anspruch 1 und 2,
dadurch gekennzeichnet,
daß die Schutzschicht aus Zirkonoxid mit Zusätzen von 1 - 10 % Erdalkalioxiden besteht.

4. Kugelförmiges Brennelement nach einem der Ansprüche 1 bis 3,
dadurch gekennzeichnet,
daß der $ZrO_2$-Schutzschicht 5 % MgO und/oder $Y_2O_3$ zugesetzt sind.

5. Kugelförmiges Brennelement nach Anspruch 1 bis 4,
dadurch gekennzeichnet,
daß die keramische Schutzschicht aus 95 % $ZrO_2$ und 5 % MgO eine Dichte größer als 5,83 g/cm³ aufweist.

6. Verfahren zur Herstellung eines kugelförmigen Brennelements nach Anspruch 1 bis 5,
dadurch gekennzeichnet,
daß die keramische Schutzschicht auf die Graphitaußenschale mittels Flammspritzen aufgebracht und anschließend isostatisch nachverdichtet wird.

7. Verfahren nach Anspruch 6,
dadurch gekennzeichnet,
daß das Flammspritzen bei Temperaturen oberhalb 1200°C und das isostatische Nachverdichten mit Drücken oberhalb 30 MPa erfolgt.